# EUROPEAN PATENT APPLICATION

(11) **EP 3 726 250 A1**
(43) Date of publication of application: **21.10.2020**
(21) Application number: 19305510.0
(22) Date of filing: 18.04.2019
(51) Int. Cl.: G01S 17/87, G01S 17/93, G01S 17/08, G01S 13/87, G01S 13/93, G01S 15/87, G01S 15/93

(54) **SYSTEM AND METHOD FOR PREVENTING COLLISION**

(71) Applicant: Terabee S.A.S., 01630 Saint-Genis Pouilly (FR)
(72) Inventor: KOVERMANN, Jan W., 01630 Saint-Genis-Pouilly (FR); RUFFO, Massimiliano, 1224 Chêne-Bougerie (CH); POTIER, Baptiste, 01630 Saint-Genis-Pouilly (FR)
(74) Representative: Weihs, Bruno Konrad

(57) **Abstract**

A method for a detection from a physical entity, of an intrusion of an object in an intrusion zone. The method comprises providing on the physical entity at least a first and a second distance measuring sensor, which measure the distance respectively by means of a first directed beam and a second directed beam; defining the intrusion zone by means of the first and the second beams that are oriented departing from the first and the second sensor from the physical entity in respective first and second directions that intersect each other at least in pairs, at a crossing point located away from the physical entity; monitoring for each of the first and the second beams, a breaking of the beam by the object, and measuring a distance separating the object from the first or the second sensor that emits the beam at a moment of the breaking; and detecting the intrusion from the monitored breaking and the measured distance from a least a subset of the first and second beams, if the measured distance has a value below a respective first and second determined threshold.

## Description

### Technical field

The present invention relates to a system and a method that aims at protecting a 2-dimensional or 3-dimensional intrusion zone around a physical entity, e.g., a vehicle, or in a specific location from intrusion by an object.

### Background

Current Automatic Guided Vehicles (AGVs) anti-collision systems are based mostly on lasers scanners, arrays of parallel ultrasound, radar or 2D cameras that are located mostly at the periphery or at a central point of the AGV, and detect an obstacle by means of a semiconductor / sensor that senses the perimeter of the AGV and receives beams reflected by the obstacle.

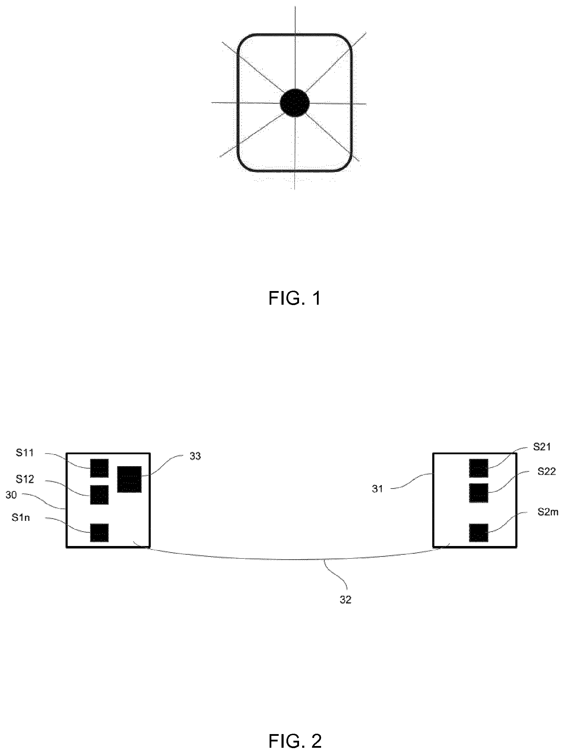

In an alternative system, multiple laser scanners are used on the AGV, but it is only to ensure that their radial coverage covers e.g. both sides of the AGV, 360° around the AGV, or three sides depending the case. **Figure 1** contains a schematic view of a centrally operated anti-collision system according to prior art, wherein the beams depart from a central point of the AGV, the former being represented as a circle, and the latter as a round cornered rectangle. The beams are represented by the 8 straight lines departing from the circle.

The present invention seeks at finding an alternative system and method for preventing collision.

### Summary of invention

In a first aspect, the invention provides a method for a detection from a physical entity, of an intrusion of an object in an intrusion zone. The method comprises providing on the physical entity at least a first and a second distance measuring sensor, which measure the distance respectively by means of a first directed beam and a second directed beam; defining the intrusion zone by means of the first and the second beams that are oriented departing from the first and the second sensor from the physical entity in respective first and second directions that intersect each other at least in pairs, at a crossing point located away from the physical entity; monitoring for each of the first and the second beams, a breaking of the beam by the object, and measuring a distance separating the object from the first or the second sensor that emits the beam at a moment of the breaking; and detecting the intrusion from the monitored breaking and the measured distance from a least a subset of the first and second beams, if the measured distance has a value below a respective first and second determined threshold.

In a preferred embodiment, the intrusion zone is 3-dimensional, and the method further comprises providing on the physical entity at least a third distance measuring sensor that produces a third directed beam. The step of defining the intrusion zone also makes use of the third directed beam that is oriented departing from the third distance measuring sensor from the physical entity in a third direction that intersects at least one of the first, the second, and a fourth direction of a fourth directed beam from a fourth distance measuring sensor provided on the physical entity, at a further crossing point located away from the physical entity. The step of monitoring comprises also for the third directed beam the monitoring of the breaking of the third directed beam by the object, and the measuring of a distance separating the object from the third distance measuring sensor that emits the third directed beam at a moment of the breaking. The step of detecting the intrusion also detects from the monitored breaking of the third directed beam if the measured distance has a value below an at least third determined threshold. A number of directed beams is arranged based on an assumption of a minimum object size or geometry of the object.

In a further preferred embodiment, the first directed beam and the second directed beam define a first plane substantially parallel to a ground on which the physical entity rests, and the third directed beam and the fourth directed beam define a second plane non-parallel to the first plane.

In a further preferred embodiment, a periphery of the physical entity is divided into a plurality of side parts, and the first distance measurement sensor and the second distance measurement sensor are configured to define the intrusion zone in front of a first of the plurality of side parts, in a direction departing from the physical entity.

In a further preferred embodiment, for at least a further one of the plurality of side parts distinct from the first side part, the method further comprises providing a corresponding further pair of distance measurement sensors, and the further pair of distance measurement sensors is configured to define a further intrusion zone in front of the further one of the plurality of side parts, according to the step of defining an intrusion zone, and the method comprises the further steps of monitoring and detecting for the further pairs of distance measurement sensors similar to the corresponding steps as applied with the first and second distance measurement sensors.

In a further preferred embodiment, the method further comprises for the detection of the intrusion in front of the first of the plurality of side parts, a further step of providing a fifth and a sixth distance measuring sensor, which measure distance respectively by means of a fifth and a sixth directed beam, the fifth and the sixth distance measurement sensors being configured to direct the fifth beam parallel to the first beam, and the sixth beam parallel to the second beam, and to intersect respectively with the second and the first beam, hence adding redundancy in the detection of the intrusion of the object in the intrusion zone.

In a further preferred embodiment, the physical entity is a moving device.

In a further preferred embodiment, the method further comprises providing on the physical entity at least a first device and a second device distinct from the first device, the first and the second device comprising respectively at least the first and the second distance measuring sensor.

In a further preferred embodiment, the method further comprises providing on the physical entity at least a first device and a second device distinct from the first device, the first device comprising at least the first and the third distance measuring sensors, and the second device comprising at least the second and the fourth distance measuring sensors.

In a second aspect, the invention provides a system for a detection from a physical entity of an intrusion of an object in an intrusion zone. The system comprises at least a first distance measuring sensor and a second distance measuring sensor, configured to measure distance respectively by means of a first and a second directed beam, the first and the second beams being configured to define the intrusion zone by being oriented to depart from the first and the second sensor from the physical entity in respective first and second directions that intersect each other at least in pairs, at a crossing point located away from the physical entity; monitoring means for each of the first and the second beams, configured to monitor a breaking of the beam by the object, and to measure a distance separating the object from the first or the second sensor that emits the beam at a moment of the breaking; and detecting means configured to detect the intrusion from the monitored breaking and the measured distance from a least a subset of the first and second beams, if the measured distance has a value below a respective first and second determined threshold.

In a further preferred embodiment, the intrusion zone is 3-dimensional, and the system further comprises at least a third distance measurement sensor means intended to be mounted on the physical entity and that is enabled to produce a third directed beam; the third directed beam being configured to further define the intrusion zone by being oriented departing from the third distance measurement sensor from the physical entity in a third direction to intersect at least one of the first direction, the second direction, and a fourth direction of a fourth directed beam from a fourth distance measurement sensor intended to be mounted on the physical entity, at a further crossing point located away from the physical entity. The monitoring means is further configured for the third directed beam to monitor the breaking of the third directed beam by the object, and to measure of a distance separating the object from the third distance measurement sensor that emits the third directed beam at a moment of the breaking. The detecting means is further configured to detect the intrusion from the monitored breaking of the third directed beam if the measured distance has a value below an at least third determined threshold. A number of directed beams is arranged based on an assumption of a minimum object size and/or geometry of the object.

In a further preferred embodiment, the first directed beam and the second directed beam define a first plane substantially parallel to a ground on which the physical entity rests, and the third directed beam and the fourth directed beam define a second plane non-parallel with the first plane.

In a further preferred embodiment, the system further comprises processing means configured to implement the monitoring means and the detecting means.

In a further preferred embodiment, the system further comprises at least a first device and a second device distinct from the first device, the first and the second device being intended to be mounted on the physical entity, and comprising respectively the first distance measurement sensor and the second distance measurement sensor.

In a further preferred embodiment, either one of the first device and the second device comprises the processing means.

In a further preferred embodiment, the system further comprises an electrical link between the first distance measurement sensor and the second distance measurement sensor, configured to transmit signals from the first distance measurement sensor and the second distance measurement sensor to the monitoring means.

In a further preferred embodiment, the first and the second distance measurement sensors are either one of the list comprising: a single point sensor, a multi-pixel sensor, a single point "small" Field of View (FoV) Time of Flight (ToF) sensor, a 3D-camera, an ultrasound, a radar or any other device capable of measuring distance.

### Brief description of the figures

The invention will be better understood through the description of examples of preferred embodiments and in reference to the appended figures, wherein
figure 1 is a schematic representation of an anti-collision system according to prior art;
figure 2 is a schematic illustration of a system according to an example embodiment of the invention;
figure 3 is a schematic illustration of a system according to a further example embodiment of the invention;
figure 4 is a schematic illustration of a system according to a further example embodiment of the invention;
figure 5 is a schematic illustration of a system according to a further example embodiment of the invention;
figure 6 is a schematic illustration of a system implemented on an Automatic Guided Vehicle (AGV) according to a further example embodiment of the invention;
figure 7 is a schematic illustration of a system implemented on an Automatic Guided Vehicle (AGV) with a definition of an intrusion zone according to a further example embodiment of the invention;
figure 8 shows a plurality of intrusion zone definitions in 2 dimensions according to further example embodiment of the invention;
figure 9 shows a 3-dimensional intrusion zone definition according to a further example embodiment of the invention;
figure 10 shows a schematic configuration for creating a 3-dimensional intrusion zone according to a further example embodiment of the invention;
figures 11 and 12 show computer simulations of intrusion zones created on a side of a physical entity, according to a further example embodiment of the invention;
figure 13 shows a computer simulation of an intrusion zones created around a whole circumference of a same physical entity, according to a further embodiment of the invention;
figure 14 shows a computer simulation in which specifically defined areas of the intrusion zone are highlighted;
figures 15 to 18 show computer simulations for defining a 3-dimensional intrusion zone around a physical entity that may move with 6 degrees of freedom, according to further example embodiments of the invention;
figure 19 contains a flowchart illustrating a preferred embodiment of the method according to the invention; and
figure 20 is a schematic illustration of a system according to a further example embodiment of the invention.

### Detailed description of preferred embodiments of the invention

The present invention relates to a system and a method, which aim at protecting a 2 or 3-dimensional intrusion zone at a periphery of a physical entity against intrusion. The 2 or 3-dimensional intrusion zone corresponds to respectively an area and a volume. The system may be mounted on the physical entity, e.g., a moving vehicle, or an Automatic Guided Vehicle (AGV), or mounted on a static physical entity. In both use cases, the system and method enable a detection of an entrance, i.e., intrusion of an object in the 2 or 3-dimensional intrusion zone. The system may be configured to alert a user or a control system about the intrusion into the intrusion zone.

Depending on setup of the system, the invention may enable a control of intrusion of multiple intrusion zones.

Hereunder, a number of specific properties that the inventive system and/or method possess in preferred embodiments are presented:
- the inventive system comprises at least two distance sensors,
- preferably, the system comprises at least two physical devices containing each one of the at least two distance sensors, possibly also further distance sensors;
- the sensor(s) are each defined as having a detection axis, and emit each a directed beam in direction of their respective detection axis, whereby the sensor(s)'s detection axis are looking from the system towards the intrusion zone to protect, in order to intersect their beams-even if they don't actually intersect, because for example the intersection point would be to far away from the sensors to be reached by the beams-but the beams are in converging directions;

- a distance sensor may for example be a single point or multi-pixel sensor, a single point "small" Field of View (FoV) Time of Flight (ToF) sensor, a 3D-camera, an ultrasound, a radar or any other device capable of measuring distance;
- the at least two physical devices, or indeed the at least two distance sensors are linked to enable an exchange of data, and to synchronize sensors readings. The link may for example be realized by a cable, a wireless connection, or any other type of suitable communication;
- preferably, one of the at least two physical devices may comprise a processing unit configured to manage sensors-especially if they need triggering-, format data and activate an alert system. In a preferred embodiment, the processing unit may be external to all physical devices containing sensors. In a further preferred embodiment with sensor(s) only, the processing unit is distinct from the sensor(s);
- an intrusion zone, also called anti-collision zone, is defined by beams of the sensors that cross each other at a point located away from the physical entity to protect, e.g., a robot or a static object;
- the sensors' beams themselves define the intrusion zone, i.e., a protected area, where the intrusion zone is "intruded" when one of the beams is "broken" due to a relative movement between the physical entity and a collision-object. The "broken" status is defined by a reading of a specific distance, or less than this, read by the concerned sensor. This way, an alert system may be activated if one beam is crossed by someone or something.

These properties and others will be explained in more detail below.

### Systems for preventing collision

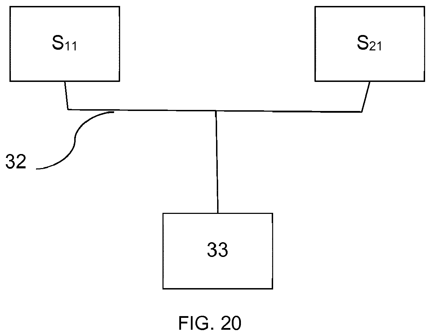

In this section, a number of examples for systems for presenting collision are described as example embodiments intended to better understand the invention. Referring to **figure 20**, this contains a schematic illustration of a system according to an example embodiment of the invention. The system comprises a first distance sensor **S₁₁** and a second distance sensor **S₂₁**, which are linked by a link **32**. The link **32** is also connected to a processing unit **33**, which, among others is configured to monitor signals received from the first distance sensor **S₁₁** and second distance sensor **S₂₁** over the link **32**. The first distance sensor **S₁₁** and second distance sensor **S₂₁** are intended to be used on a physical entity, which is not shown in figure **20** for a better readability but will be illustrated in subsequent figures. The physical entity may be a static entity, or a mobile entity such as a robot or an Automatic Guided Vehicle (AGV). Each of the first sensor S₁₁ and the second sensor S₂₁ is configured to emit a directed beam (not illustrated in **figure 20**) that is oriented according to an axis of the sensor along which the sensor is designed to emit for example electromagnetic radiation in a known fashion. The orientation of the sensor is achieved relative to physical entity for which it is intended, and may be achieved by known mechanical means (not illustrated) such as for example a fixed mounting or a hinge. The beam may be electromagnetic radiation. The electromagnetic radiation may for example be in the range of Infrared (IR) radiation. The manner in which the directed beams are oriented will be explained further down this description.

Referring to **figure 2**, this contains a schematic illustration of a further system according to an example embodiment of the invention. The system comprises a first device **30** and a second device **31**, which are linked by a link **32**. The first device **30** comprises at least a first distance sensor **S₁₁**, **S₁₂**, ..., **S₁ₙ**, and thus may comprise more than 1 distance sensor, up to n distance sensors, n being an integer. The second device **31** comprises at least a second distance sensor **S₂₁**, **S₂₂**, ..., **S₂ₘ**, and thus may comprise more than 1 distance sensor, up to m sensors, m being an integer. In this example of the system according to the invention, the first device **30** comprises a processing unit **33**.

The first device **30** and the second device **31** are intended to be used on a physical entity, which is not shown in **figure 2** for a better readability but will be illustrated in subsequent figures. The physical entity may be a static entity, or a mobile entity such as a robot or an Automatic Guided Vehicle (AGV). Each of the first device's sensors **S₁₁**, **S₁₂**, ..., **S₁ₙ** and the second device's sensors **S₂₁**, **S₂₂**, ..., **S₂ₘ** is a distance measurement sensor, which may be for example be a single point sensor or a multi-pixel sensor, a 3D-camera, and may for example use the technology of Time of Flight (ToF) sensors.

Each of the first device's sensors **S₁₁**, **S₁₂**, ..., **S₁ₙ** and the second device's sensors **S₂₁**, **S₂₂**, ..., **S₂ₘ** is configured to emit a directed beam (not illustrated in figure 2) that is oriented according to an axis of the sensor along which the sensor is designed to emit for example electromagnetic radiation in a known fashion. The orientation of the sensor is achieved relative to the device that comprises it, and may be achieved by known mechanical means (not illustrated) such as for example a fixed mounting or a hinge. The electromagnetic radiation may for example be in the range of Infrared (IR) radiation. The manner in which the directed beams are oriented will be explained further down this description.

The link **32** between the first device **30** and the second device **31** enables an exchange of data, and a synchronizing of sensors readings from each of the first device's sensors **S₁₁**, **S₁₂**, ..., **S₁ₙ** and the second device's sensors **S₂₁**, **S₂₂**, ..., **S₂ₘ**. The link **32** may for example be realized by a cable, a wireless connection, or any other type of suitable communication.

The processing unit **33** is configured to manage each of the first device's sensors **S₁₁**, **S₁₂**, ..., **S₁ₙ** and the second device's sensors **S₂₁**, **S₂₂**, ..., **S₂ₘ**-especially if they need triggering -, format data and activate an alert system (both data and alert system are not illustrated in **figure 2**). In a preferred embodiment, the processing unit **33** may be external to all physical devices containing sensors as will be shown in other figures here under.

More generally, properties of sensors described for individual sensors, or as part of a device, may be similar, and apply also for the following examples of systems. This also applies to properties that the processing unit **33** may have.

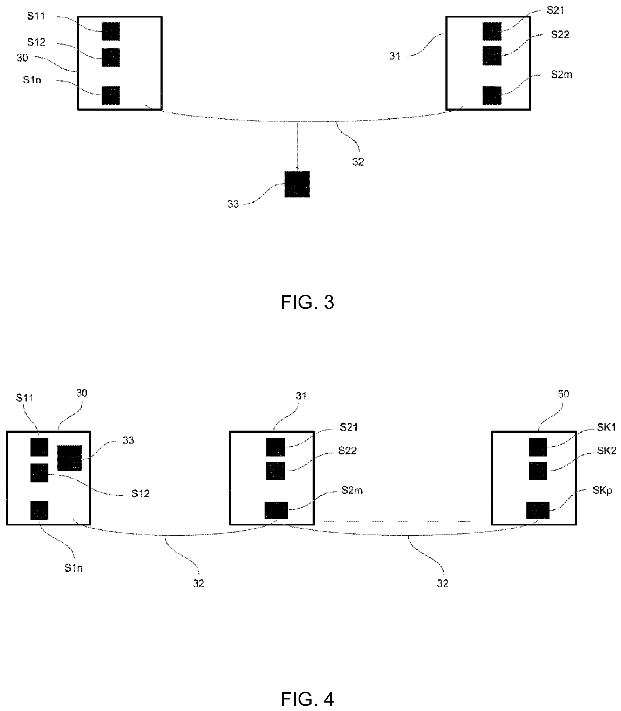

Referring to **figure 3**, this contains a schematic illustration of a system according to a further example embodiment of the invention. The system is similar to that illustrated in **figure 2**, but differs in that the processing unit **33** is located outside of the first device **30**, and for that matter also outside of the second device **31**. The processing unit **33** is connected to the first device **30** and second device **31** via the link **32**. Alternatively, it may also be connected through a distinct link (not illustrated in **figure 3**) from link **32**.

Referring to **figure 4**, this contains a schematic illustration of a further system according to a further example embodiment of the invention. The system is based on that of **figure 2**, but comprises k-2 additional further devices with distance sensors, k being an integer. In **figure 4**, only the k-th further device is shown. The k-th further device comprises at least 1 distance sensor **Sₖ₁**, **Sₖ₂**, ..., **Sₖₚ**, and thus may comprise more than 1 distance sensor, up to p distance sensors, p being an integer. All devices comprising distance sensors are linked, for example by the link **32**. While **figure 4** shows only the single processing unit **33**, it may in an alternative embodiment comprise additional processing units (not illustrated in **figure 4**). Furthermore, in a preferred embodiment, the system may be subdivided in a plurality of subsystems, each subsystem comprising at least 2 devices with distance sensors, and optionally multiple processing units to handle the subsystems (subsystems are not shown in **figure 4**).

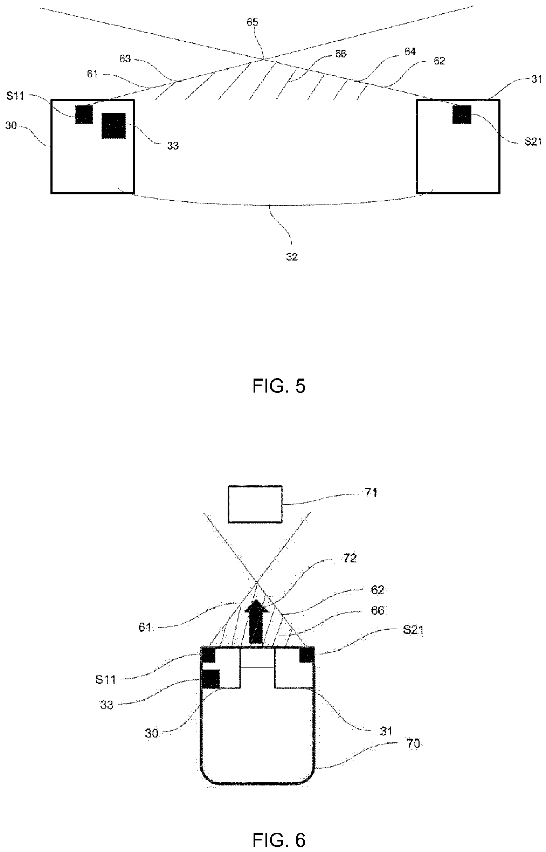

Referring to **figure 5**, this contains a schematic illustration of a further system according to a further example embodiment of the invention. This system is based on that of **figure 2**, wherein the first device **30** comprises a single distance sensor **S₁₁**, and the second device also contains a single distance **S₂₁**.

As explained for **figure 2**, each of the first device's sensor **S₁₁** and the second device's sensors **S₂₁** is configured to emit a directed beam respectively referenced as **61** and **62**. The directed beam **61** is oriented according to an axis **63** of the distance sensor S₁₁ along which the distance sensor **S₁₁** is designed to emit its radiation. The directed beam **62** is oriented according to an axis **64** of the distance sensor **S₂₁** along which the distance sensor **S₂₁** is designed to emit its radiation. The manner in which the directed beams **61** and **62** are oriented as such that they intersect at an intersection **65**. This allows to create a triangularly shaped controlled intrusion zone **66** represented in a hashed surface in **figure 5**.

### Use of the inventive system with a movable physical entity

Referring to **figure 6**, this contains a schematic illustration of a system similar to that illustrated in **figure 5**, implemented on a movable physical entity **70** according to a further example embodiment of the invention.

The movable physical entity may for example be an Automatic Guided Vehicle (AGV).

In **figure 6**, the movable physical entity **70** is moving "forward" in a direction indicated by an arrow **72**. The distance sensors beams **61** and **62** of the first and second devices **30** and **31** are crossing in front of the direction of movement **72**, and create the detection zone **66** in a front face of the physical entity **70**.

It is noted that the system could in an alternative embodiment only comprise the first sensor beams **61** and **62**, and the processing unit **33**, but do without the first and second devices **30** and **31**.

The detection zone **66** is an area in front of the physical entity **70** that is delimited by the crossing beams **61** and **62**, that define the perimeter of the area. This means that whatever object **71** will be in front of the physical entity **70**, with whatever size that falls within the coverage of the sensors' **S₁₁** and **S₂₁** fields of view (FoV) and therefore triggers a reading of the concerned sensor, this object **71** will be read by one of the distance sensors **S₁₁** and **S₂₁**; this detection is called "beam breaking" in analogy to a photocell trigger. This one makes use of an equipment to sense the distance, absence, or presence of an object by using a light transmitter, often infrared, and a photoelectric receiver, and it is based on a change of the reflected intensity reading which is proportional to the distance. In an alternative embodiment, light signal intensity value in used, in case of ToF, or any other method if another technology is used instead.

Therefore, in any situation where the AGV moves forward, the detection zone in front of the movable physical entity, i.e., the frontal face of the movable physical entity **70** is covered by the detection zone **66** defined by the two beams **61** and **62**.

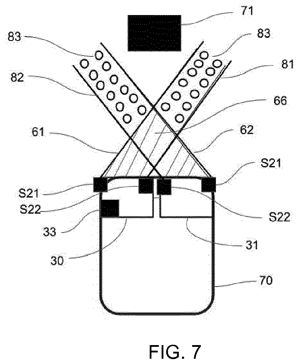

Referring to **figure 7**, this contains a schematic illustration of a system with distance sensors comprising devices, implemented on the movable physical entity **70** with a definition of an intrusion zone according to a further example embodiment of the invention.

In **figure 7**, the first and second devices **30** and **31** each comprise respectively 2 distance sensors **S₁₁**, **S₁₂** and **S₂₁**, **S₂₂**. In addition to the two beams **61** and **62** already discussed for example in **figure 6**, two further beams **81** and **82** are emitted respectively by the distance sensors **S₁₂** and **S₂₂**. The two further beams **81** and **82** are respectively substantially parallel to the beams **61** and **62**. Hence there are two types of areas with multiple crossing beams: a warning area **83** is a warning zone, and the intrusion zone **66** is a stop zone intended to generate a trigger indicating that the moving physical entity **70** needs to stop (stopping trigger and mechanism are not illustrated in **figure 7**). The use of multiple distance sensors **S₁₁**, **S₁₂** and **S₂₁**, **S₂₂** adds redundancy and generally the object **71** may not penetrate the intrusion zone **66** and come into contact with the physical entity **70** without crossing at least 2 of the sensors beams and thus triggering a minimum of 2 alarms (triggering not illustrated in **figure 7**).

### Multiple directions of movement

Departing from the assumption that the movable physical entity has a plurality of sides, e.g., four sides as in the case of **figure 7** for the physical entity **70**, it is noted that 2 distance sensors enable to define an intrusion zone for one of the sides of the physical entity, independently if the physical entity **70** is moving in that direction or the object **71** is approaching the physical entity **70** on the same direction. This means that if we want to cover all sides of the movable entity, we will need a minimum of 8 distance sensors, positioned for example on the 4 corners of the physical entity **70** where we can place 4 physical devices, each comprising at least 2 distance sensors.

### Shape of the intrusion zone

The shape of the intrusion zone depends on how many distance sensors, and thus how many beams we use: with two distance sensors, i.e., two beams, a triangle is "drawn". One may see the beam as a line of the geometry that we draw. The goal is to define an intrusion zone "to protect", and the distance sensors are delimiting this intrusion zone with their beams.

If something crosses the beams delimiting the intrusion zone, the processing unit of the system may for example activate an alarm, possibly stop the physical entity if it is moving, and possibly warn the user of the physical entity. Depending if we create different zones of protection or not, it is possible that the warning is implemented with a light, a sound or a command sent to stop the physical entity and system before it enters in collision with the object that enters inside the perimeter of protection, i.e., intrusion zone delimited by the beams.

The technology used in the inventive system and method advantageously enables to set a modular, flexible and possibly redundant intrusion zone of anti-collision all around the movable physical entity. In contrast to a system with laser scanner, the system according to the invention uses no moving parts, but rather it's all based on "static beams". Also, there is no existing solution in prior art that provides anti-collision by crossing beams or field of views of similar sensors.

A further advantage of the invention, very importantly, is that it becomes comparatively easy to create redundancy, because of the use of multiple sensors rather than a single source/reception, the latter being that which is likely mostly used by competing technologies of prior art. The use of a single point sensor combined with a multi-pixel distance sensor, an ultrasound sensor or even a 3D Camera for defining detection zone or area is possible. The multiple beams and technologies add a level of redundancy.

A further advantage of the system is the possibility of covering comparatively wide areas with only a few beams, which means simplification of the function and cost savings.

### Examples of possible distance sensors configured in 2D

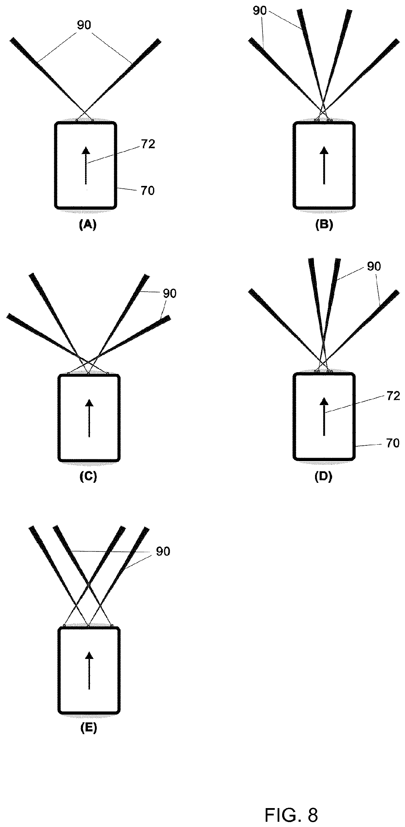

**Figures 8A to 8E** show a plurality of intrusion zone definitions in 2-dimensions according to further example embodiments of the invention.

In each of the **figures 8A and 8E**, the movable physical entity **70** is enabled to move in the direction **72**, and the side in front of this direction comprises a plurality of devices that each comprise at least 1 distance sensor (devices and distance sensors not illustrated in the figures). The distance sensors are configured to emit directed beams **90** in order to shape intrusion zones. The intrusion zones are obtained by orienting the directed beams to cross each other in pairs. In **figure 8A**, the intrusion zone is similar to that shown in **figure 6**. In **figure 8B**, the intrusion zone is obtained by an overlap of two intrusion zones respectively created by pairs of directed beams. In **figure 8C**, the intrusion zone is an assembly of a plurality of triangular intrusion zones. Similarly, **figure 8D** shows an intrusion zone obtained as a patchwork of a plurality of triangular intrusion zones. **Figure 8E** shows an intrusion zone similar to that discussed in **figure 7****.**

### Extension from 2D coverage to 3D coverage

When using eye-safe technology, such as for example ToF distance sensors from Terabee, distance sensors may be mounted on a physical entity to look bottom up since there is no potential damage to human eyes. This enables to make a system capable of protecting a 3D space by creating a 3-dimensional intrusion zone.

A number of directed beams is arranged based on an assumption of a minimum object size and/or geometry of the object. In other words, the arrangement actually protects against the intrusion of a set of objects that are defined a priori. The directed beams are then arranged such that none of the listed objects can enter the 3D intrusion zone without being detected.

In further examples, the invention encompasses configurations in 3 dimensions that are also modulable, flexible and redundant on most of the physical entity. For example, taking distance sensors as elements of the physical entity, even if one distance sensor among the distance sensors ceases its operation or fails in a defined way, the other remaining distance sensors still ensure a functioning anti-collision system, i.e., monitoring an intrusion zone.

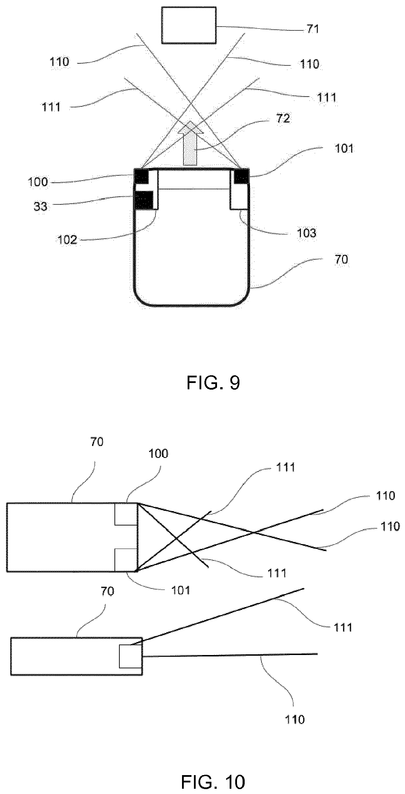

In the example system illustrated in **figure 9**, we have 2 layers of sensors **100** and **101** comprised respectively in devices **102** and **103**.

In a preferred embodiment of the system in **figure 9** a layer of sensors distributed in sensor groups **100** and **101** is said to be "flat" and operates in a same plane parallel to the ground, as per examples in sections above. More generally, a layer of sensors comprises multiple sensors, at least two, that have their sensing axis arranged in a same plane. For example, it would be possible to have one layer of two sensors delimiting one plane and another layer of two sensors delimiting another plane (in 3D), as we will see in **figure 10** herein below. **Figure 9** does not show the individual sensors for a better readability. However, from the two sensors delimiting one plane, each would be in a different one of sensor groups **100** and **101**.

In the system of **figure 9**, each pair of beams **110** and **111** is produced respectively from both sensor groups **100** and **101**, and are on different non parallel planes, one of which is parallel to the ground, and another one of which is oriented slanted to the ground, and raises from the system to a level which is perceived as increasing the more it gets away from the source / system.

**Figure 10** clarifies by means of a lateral view (the view in the lower part of **figure 10** is the lateral view, while the view in the upper part of **figure 10** is a view taken from above of the same physical entity) of the physical entity **70**, where it is possible to appreciate the different "angles of attack" of planes resulting from beams **110** and beams **111**.

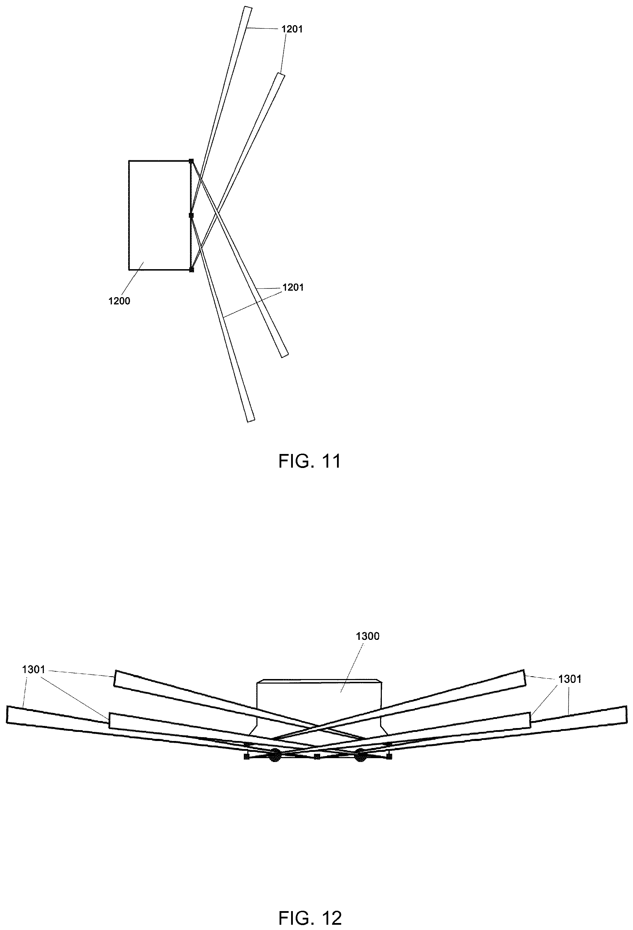

Referring to **figures 11 and 12**, these show computer simulations of intrusion zones created on a side of a physical entity, according to a further example embodiment of the invention. **Figure 11** shows a physical entity **1200**, a side of which comprises 2 devices with each 2 distance sensors emitting beams **1201** (device and distance sensors not illustrated in **figure 11**). The beams **1201** define zones, including intrusion zones as previously discussed in this document, intended to detect an object on the concerned side of the physical entity **1200**. **Figure 12** shows a physical entity **1300** with 6 beams **1301** emitted from one of its sides and oriented away from the ground on which the physical entity **1300** is located. One layer of 4 beams **1301** is covering a whole down part of the physical entity **1300**. 2 times, 2 sensors are crossing to cover a whole side of a chassis of the physical entity **1300**. It adds redundancy and enables also to cover the corners of the physical entity **1300**. We may then adjust the value of the angle to detect more upfront of the physical entity or in contrary close to it. A second layer of 2 beams **1301** permits to detect in another top plane (3D) (similar as in **figure 10**). The 2 beams **1301** from the second layer go from the same origin but cover another plane in the space. It allows to cover the upper part of the physical entity **1300** to avoid a collision between the object of the physical entity **1300** and an object that is not touching the ground (not shown in **figure 12**).

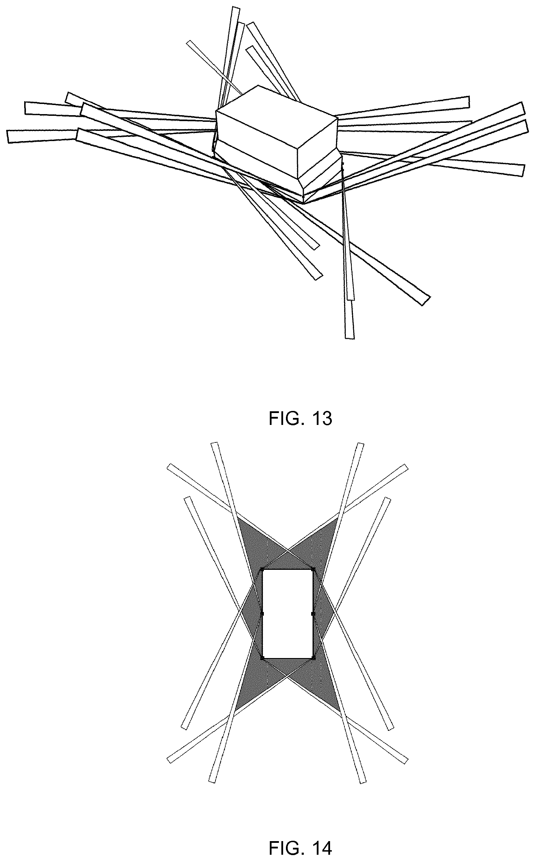

Referring to **figures 13 and 14**, these show computer simulations of intrusion zones created around a whole circumference of a physical entity, according to a further embodiment of the invention. The creation of intrusion zones in those figures results in a "full coverage configuration", where the physical entity is entirely protected by the created intrusion zones.

**Figure 14** shows a computer simulation in which specifically defined areas of the intrusion zone are highlighted.

**Figures 13, 14** **and** **15** show a full coverage of the physical entity in 3D. There are respectively 6 sensors on the longitudinal faces and 4 on the lateral faces. The 6 sensors configuration is similar to the one seen in **figures 12** **and** **13**. The lateral sensors configuration comprises 4 sensors from the same origin. Two of the 4 sensors cover the plane from the chassis of the physical entity and two others of the 4 sensors cover an upper part of the physical entity (3D coverage). The fact that the sensors are crossed allows to cover a larger surface and we can define with the angle of the sensors the zone we want to define as protected.

### Other examples of applications

The system works also for further use cases, for example a fixed robotic arm operating in an area to be protected from human/object intrusion, or for a drone.

Another use case is the protection of a tool attached at the end of a robotic arm, which may move in 6 degrees of freedom in space and could collide in any direction. An example of a system for protection comprises an appropriate number of sensor beams, from distance sensors placed on the corners of the tool, including on the robotic arm, and emitting "towards the outside"; all distance sensors are clearly part of the same system and managed by the same processing unit.

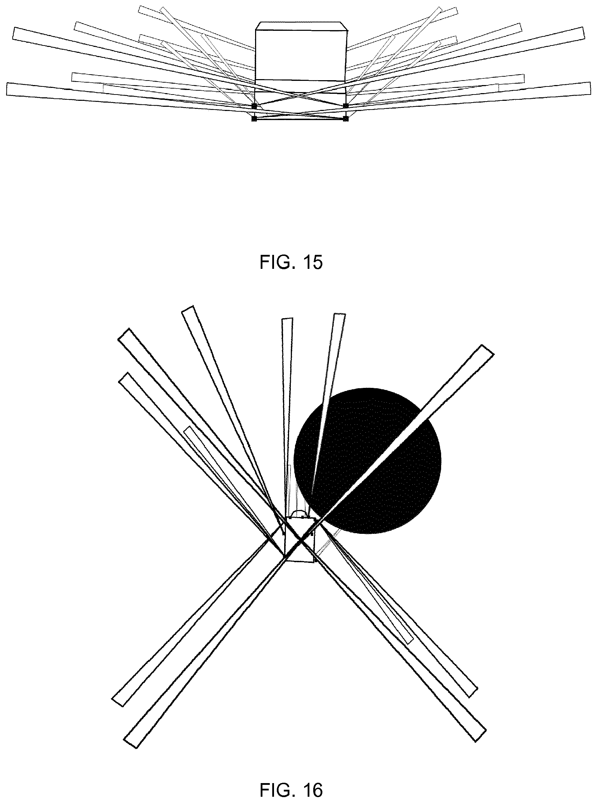

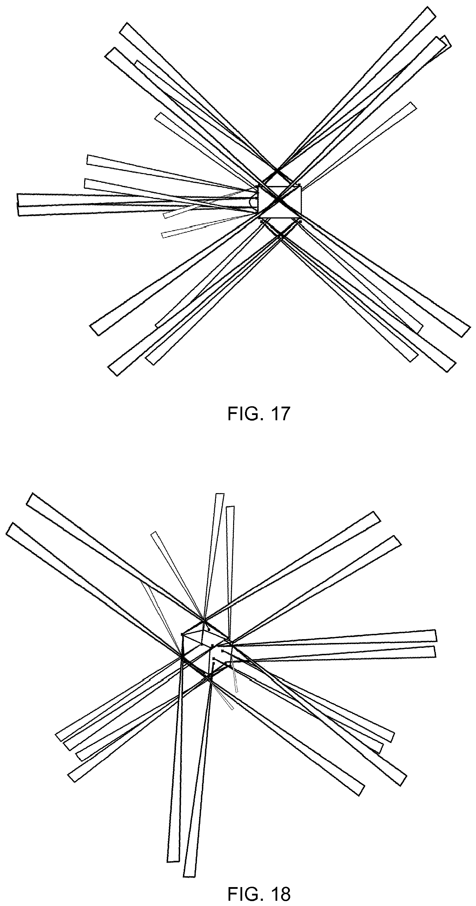

As illustrated in **figures 16 to 18** in a top view, the technique of crossing beams in a triangle configuration in 2 dimensions can be converted into a pyramidal configuration for covering the 3D space. The large ball in **figure 16** is just a random object/obstacle places in the FoV of sensors.

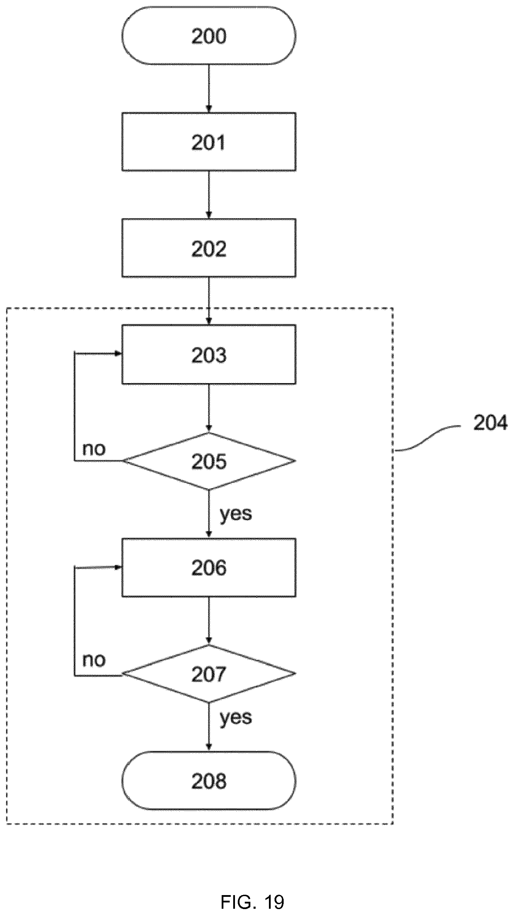

**Figure 19** contains a flowchart illustrating a preferred embodiment of the method according to the invention.

Step **200** states the object of the method, namely to detect from an observing point located on a physical entity, an intrusion of an object in an intrusion zone and starts the method.

Step **201** provides at least a first and a second distance measuring sensor, whereby the distance measuring is made respectively by means of a first and a second directed beam.

Step **202** defines the intrusion zone by means of the first and the second beam that are oriented departing from the first and the second sensor from the physical entity to intersect each other, at a crossing point located away from the physical entity. Step **203** monitors for each of the first and the second beam a breaking of the beam by the object and measures a distance separating the object from the first or the second sensor that emits the beam at a moment of the breaking.

Step **204** detects the intrusion from the monitored breaking and the measured distance from a least a subset of the first and second beam if the measured distance has a value below a respective first and second determined threshold.

In a preferred embodiment step **204** comprises, for the case that the breaking of the beam is detected (decision **205**, branch "yes"), the measured distance is checked at rectangular box **206**. For the case that the measured distance has a value below the determined threshold (this is defined according to the beam being broken) (decision **207**, branch "yes") an intrusion in the intrusion zone is detected at step **208**. In case the measured distance has a value greater than the determined threshold (decision **207**, branch "no") the method continues to monitor in step **203**. In case no breaking of the beam is detected (decisions **205**, branch "no"), the method continues to monitor in step **203**.

## Claims

1. Method for a detection from a physical entity, of an intrusion of an object in an intrusion zone, comprising
providing on the physical entity at least a first and a second distance measuring sensor, which measure the distance respectively by means of a first directed beam and a second directed beam,
defining the intrusion zone by means of the first and the second beams that are oriented departing from the first and the second sensor from the physical entity in respective first and second directions that intersect each other at least in pairs, at a crossing point located away from the physical entity,
monitoring for each of the first and the second beams, a breaking of the beam by the object, and measuring a distance separating the object from the first or the second sensor that emits the beam at a moment of the breaking, and
detecting the intrusion from the monitored breaking and the measured distance from a least a subset of the first and second beams, if the measured distance has a value below a respective first and second determined threshold.

2. The method of claim 1, wherein the intrusion zone is 3-dimensional, the method further comprising
providing on the physical entity at least a third distance measuring sensor that produces a third directed beam;
whereby the step of defining the intrusion zone also makes use of the third directed beam that is oriented departing from the third distance measuring sensor from the physical entity in a third direction that intersects at least one of the first, the second, and a fourth direction of a fourth directed beam from a fourth distance measuring sensor provided on the physical entity, at a further crossing point located away from the physical entity;
whereby the step of monitoring comprises also for the third directed beam the monitoring of the breaking of the third directed beam by the object, and the measuring of a distance separating the object from the third distance measuring sensor that emits the third directed beam at a moment of the breaking;
whereby the step of detecting the intrusion also detects from the monitored breaking of the third directed beam if the measured distance has a value below an at least third determined threshold, and
whereby a number of directed beams is arranged based on an assumption of a minimum object size and/or geometry of the object.

3. The method of claim 2, wherein the first directed beam and the second directed beam define a first plane substantially parallel to a ground on which the physical entity rests, and the third directed beam and the fourth directed beam define a second plane non-parallel to the first plane.

4. The method of any one of claims 1 to 3, wherein a periphery of the physical entity is divided into a plurality of side parts, and the first distance measurement sensor and the second distance measurement sensor are configured to define the intrusion zone in front of a first of the plurality of side parts, in a direction departing from the physical entity.

5. The method of claim 4, wherein for at least a further one of the plurality of side parts distinct from the first side part, the method further comprises providing a corresponding further pair of distance measurement sensors, and the further pair of distance measurement sensors is configured to define a further intrusion zone in front of the further one of the plurality of side parts, according to the step of defining an intrusion zone, and the method comprises the further steps of monitoring and detecting for the further pairs of distance measurement sensors similar to the corresponding steps as applied with the first and second distance measurement sensors.

6. The method of claim 4, further comprising for the detection of the intrusion in front of the first of the plurality of side parts, a further step of providing a fifth and a sixth distance measuring sensor, which measure distance respectively by means of a fifth and a sixth directed beam, the fifth and the sixth distance measurement sensors being configured to direct the fifth beam parallel to the first beam, and the sixth beam parallel to the second beam, and to intersect respectively with the second and the first beam, hence adding redundancy in the detection of the intrusion of the object in the intrusion zone.

7. The method of claim 1, wherein the physical entity is a moving device.

8. The method of claim 1, further comprising providing on the physical entity at least a first device and a second device distinct from the first device, the first and the second device comprising respectively at least the first and the second distance measuring sensor.

9. The method of claim 2, further comprising providing on the physical entity at least a first device and a second device distinct from the first device, the first device comprising at least the first and the third distance measuring sensors, and the second device comprising at least the second and the fourth distance measuring sensors.

10. A system for a detection from a physical entity of an intrusion of an object in an intrusion zone, comprising
at least a first distance measuring sensor and a second distance measuring sensor, configured to measure distance respectively by means of a first and a second directed beam,
the first and the second beams being configured to define the intrusion zone by being oriented to depart from the first and the second sensor from the physical entity in respective first and second directions that intersect each other at least in pairs, at a crossing point located away from the physical entity,
monitoring means for each of the first and the second beams, configured to monitor a breaking of the beam by the object, and to measure a distance separating the object from the first or the second sensor that emits the beam at a moment of the breaking, and
detecting means configured to detect the intrusion from the monitored breaking and the measured distance from a least a subset of the first and second beams, if the measured distance has a value below a respective first and second determined threshold.

11. The system of claim 10, wherein the intrusion zone is 3-dimensional, the system further comprising
at least a third distance measurement sensor means intended to be mounted on the physical entity and that is enabled to produce a third directed beam;
the third directed beam being configured to further define the intrusion zone by being oriented departing from the third distance measurement sensor from the physical entity in a third direction to intersect at least one of the first direction, the second direction, and a fourth direction of a fourth directed beam from a fourth distance measurement sensor intended to be mounted on the physical entity, at a further crossing point located away from the physical entity;
whereby the monitoring means is further configured for the third directed beam to monitor the breaking of the third directed beam by the object, and to measure of a distance separating the object from the third distance measurement sensor that emits the third directed beam at a moment of the breaking;
whereby the detecting means is further configured to detect the intrusion from the monitored breaking of the third directed beam if the measured distance has a value below an at least third determined threshold, and
whereby a number of directed beams is arranged based on an assumption of a minimum object size and/or geometry of the object.

12. The system of claim 11, wherein the first directed beam and the second directed beam define a first plane substantially parallel to a ground on which the physical entity rests, and the third directed beam and the fourth directed beam define a second plane non-parallel with the first plane.

13. The system of claim 10, further comprising processing means configured to implement the monitoring means and the detecting means.

14. The system of claim 13, further comprising at least a first device and a second device distinct from the first device, the first and the second device being intended to be mounted on the physical entity, and comprising respectively the first distance measurement sensor and the second distance measurement sensor.

15. The system of claim 14, wherein either one of the first device and the second device comprises the processing means.

16. The system of any one of claims 10 to 15, further comprising an electrical link between the first distance measurement sensor and the second distance measurement sensor, configured to transmit signals from the first distance measurement sensor and the second distance measurement sensor to the monitoring means.

17. The system of any one of claims 10 to 16, wherein the first and the second distance measurement sensors are either one of the list comprising: a single point sensor, a multi-pixel sensor, a single point "small" Field of View (FoV) Time of Flight (ToF) sensor, a 3D-camera, an ultrasound, a radar or any other device capable of measuring distance.
